# EUROPÄISCHE PATENTSCHRIFT

(11) **EP 4 605 738 B1**
(45) Veröffentlichungstag und Bekanntmachung des Hinweises auf die Patenterteilung: **11.11.2026**
(21) Anmeldenummer: 23776878.3
(22) Anmeldetag: 21.09.2023
(51) Int. Cl.: G01N 27/417

(54) **VERFAHREN ZUM BETREIBEN EINES SENSORS ZUR ERFASSUNG MINDESTENS EINER EIGENSCHAFT EINES MESSGASES IN EINEM MESSGASRAUM**
METHOD FOR OPERATING A SENSOR FOR DETECTING AT LEAST ONE PROPERTY OF A MEASUREMENT GAS IN A MEASUREMENT GAS CHAMBER
PROCÉDÉ POUR FAIRE FONCTIONNER UN CAPTEUR POUR DÉTECTER AU MOINS UNE PROPRIÉTÉ D'UN GAZ DE MESURE DANS UNE CHAMBRE DE GAZ DE MESURE

(30) Priorität: 19.10.2022 DE 102022211060
(43) Veröffentlichungstag der Anmeldung: 27.08.2025
(73) Patentinhaber: Robert Bosch GmbH, 70442 Stuttgart (DE)
(72) Erfinder: SCHWAERZLE, Andreas, 70563 Stuttgart (DE); SCHMID, Christian, 71254 Ditzingen-Hirschlanden (DE)
(86) Internationale Anmeldenummer: PCT/EP2023/075993
(87) Internationale Veröffentlichungsnummer: WO 2024/083431

(56) Entgegenhaltungen:
- DE-A1- 102012 224 374

## Beschreibung

### Stand der Technik

Aus dem Stand der Technik ist eine Vielzahl von Sensoren und Verfahren zur Erfassung mindestens einer Eigenschaft eines Messgases in einem Messgasraum bekannt. Dabei kann es sich grundsätzlich um beliebige physikalische und/oder chemische Eigenschaften des Messgases handeln, wobei eine oder mehrere Eigenschaften erfasst werden können. Die Erfindung wird im Folgenden insbesondere unter Bezugnahme auf eine qualitative und/oder quantitative Erfassung eines Anteils einer Gaskomponente des Messgases beschrieben, insbesondere unter Bezugnahme auf eine Erfassung eines Sauerstoffanteils in dem Messgasteil. Der Sauerstoffanteil kann beispielsweise in Form eines Partialdrucks und/oder in Form eines Prozentsatzes erfasst werden. Alternativ oder zusätzlich sind jedoch auch andere Eigenschaften des Messgases erfassbar, wie beispielsweise die Temperatur.

Aus dem Stand der Technik sind insbesondere keramische Sensoren bekannt, welche auf der Verwendung von elektrolytischen Eigenschaften bestimmter Festkörper basieren, also auf Ionen leitenden Eigenschaften dieser Festkörper. Insbesondere kann es sich bei diesen Festkörpern um keramische Festelektrolyte handeln, wie beispielsweise Zirkoniumdioxid (ZrO₂), insbesondere yttriumstabilisiertes Zirkoniumdioxid (YSZ) und scandiumdotiertes Zirkoniumdioxid (ScSZ), die geringe Zusätze an Aluminiumoxid (Al₂O₃) und/oder Siliziumoxid (SiO₂) enthalten können.

Beispielsweise können derartige Sensoren als so genannte Lambdasonden oder als Stickoxidsensoren ausgestaltet sein, wie sie beispielsweise aus K. Reif, Deitsche, K-H. et al., Kraftfahrtechnisches Taschenbuch, Springer Vieweg, Wiesbaden, 2014, Seiten 1338 -1347, bekannt sind. Mit Breitband-Lambdasonden, insbesondere mit planaren Breitband-Lambdasonden, kann beispielsweise die Sauerstoffkonzentration im Abgas in einem großen Bereich bestimmt und damit auf das Luft-Kraftstoff-Verhältnis im Brennraum geschlossen werden. Die Luftzahl λ (Lambda) beschreibt dieses Luft-Kraftstoff-Verhältnis. Stickoxid-Sensoren bestimmen sowohl die Stickoxid- als auch die Sauerstoffkonzentration im Abgas.

Durch Kombination einer Pumpzelle, der Messzelle, und einer Sauerstoff-Referenzzelle, der Nernst-Zelle, kann ein Sensor zur Messung des Sauerstoffgehalts in einem Umgebungsgas aufgebaut werden. In einer Pumpzelle, die nach dem amperometrischen Pumpprinzip arbeitet, diffundiert bei Anlegen einer Spannung oder eines Stromes an die Pumpelektroden, die sich an unterschiedlichen Gasen befinden, ein Sauerstoffionenstrom durch einen keramischen Körper (den Sauerstoffionen leitenden Festelektrolyten), der die Gase voneinander trennt ("pumpen"). Wird die Pumpzelle dazu genutzt, den Sauerstoff-Partialdruck in einem Hohlraum, in das Umgebungsgas diffundieren kann, konstant zu halten, dann kann über die Messung des elektrischen Stroms auf die transportierte Menge Sauerstoff geschlossen werden. Dieser Pumpstrom ist, gemäß des Diffusionsgesetzes, direkt proportional zum Sauerstoff-Partialdruck im Umgebungsgas. Mit einer Nernst-Zelle kann das Verhältnis des Sauerstoff-Partialdrucks im Hohlraum zum Sauerstoff-Partialdruck in einem weiteren Referenzgasraum über die sich ausbildende Nernstspannung bestimmt werden.

Zur Einhaltung geltender Abgasvorschriften ist der Einsatz von verschiedenen weiteren bekannten Abgassensoren für die Abgasnachbehandlung für moderne Verbrennungskraftmaschinen unverzichtbar. Zum Einsatz kommen NOx-Sensoren, Partikelsensoren, Breitbandlambdasonden und binäre Sprungsonden, wobei letztere nur in Benzin- oder Gasmotoren verwendet werden. Das Lambdasignal dient z.B. zur Dosierung der Kraftstoffmenge, der Verbesserung der Abgasnachbehandlung und der Überwachung des Drei-Wege-Katalysatorwirkungsgrades. Anhand der NOx-Sensoren können die Stickoxid- und die Sauerstoffkonzentration im Abgas ermittelt werden. Beim Einsatz hinter SCR-Katalysatoren kann zusätzlich die Ammoniakkonzentration bestimmt werden. In NOx-Speicherkatalysatoren wird hierdurch die Beladung, bzw. das Ende der Einspeichermöglichkeit detektiert, während bei SCR-Katalysatoren die genaue Dosierung der Harnstoff-Wasser-Lösung erfolgt.

Die genannten Abgassensoren sind mit Heizelementen versehen, um die jeweilige Funktionsweise schnell und mit hoher Genauigkeit sicherzustellen. Das Heizelement des Partikelsensors dient zur Regeneration des Sensorelements, bei der durch Erwärmen das Abbrennen des Rußes erfolgt. Das Heizelement wird hier nur instationär betrieben. Die anderen Sensoren funktionieren nur mit hoher Genauigkeit bei einer hinreichend hohen Arbeitstemperatur der Sondenkeramik und werden daher kontinuierlich auf eine spezifizierte Zieltemperatur beheizt. Die Sensoren der neueren Generation sind mit zunehmend stärkeren Heizelementen zur Minimierung der Abgasemissionen beim Start von Verbrennungskraftmaschinen ausgestattet.

Der Partikelsensor hat ein integriertes Temperaturmesselement mit einem Messbereich von -40°C bis 950°C, um eine genaue Steuerung der Regeneration zu ermöglichen. Bei den NOx- und Lambdasonden wird die Temperatur des Sensorelements hingegen über den elektrischen Innenwiderstand der Sondenkeramik ermittelt. Dieser Innenwiderstand ist in Abhängigkeit des jeweiligen Sensorelements sowie der verwendeten Auswertelogik (analoge Schaltung oder ASIC) erst ab einer erhöhten Temperatur messbar.

Typische Breitbandsonden sind sogenannte Zweizellersonden, bei denen die Funktion über eine Pumpzelle (Leitung APES zur äußeren Pumpelektrode, Leitung IPE zur inneren Pumpelektrode) und eine Nernstzelle (Leitung IPE zur inneren Pumpelektrode, Leitung RE zur Referenzelektrode) sichergestellt wird. Über eine Messung des Widerstands der entsprechenden Zelle kann auf die Temperatur des Sensorelements geschlossen werden. Typischerweise besitzen die Widerstände von Pump- und Nernstzelle negative Temperaturkoeffizienten, sodass der elektrische Widerstand der Zellen bei höherer Temperatur abnimmt. Die Nernstzelle ist im Gegensatz zur Pumpzelle nicht direkt dem Abgas ausgesetzt und zeigt daher über Lebenszeit geringere Alterungserscheinungen, welche sich in Abweichungen von dem spezifizierten Zusammenhang zwischen Widerstand und Temperatur äußern. Daher wird für eine genauere Temperaturregelung der Widerstand der Nernstzelle herangezogen.

Die Aufheizphase der Sonden wird anhand eines in der technischen Kundendokumentation definierten Aufheizprofils in Form eines Spannungsverlaufs festgelegt. Da die Spannungsversorgung, welche meist der Bordnetzspannung entspricht, selbst typischerweise nicht geregelt werden kann, wird die gewünschte Effektivspannung durch eine Heizer-Endstufe mittels Pulsweitenmodulation sichergestellt.

Zur Sicherstellung des Überhitzungsschutzes der Sonde wird eine maximale Aufheizzeit definiert. Ist kein gültiges Temperatursignal über den Widerstand der Nernstzelle verfügbar (z.B. durch eine Leitungsunterbrechung (OL)), muss die Sondenheizung nach Ablauf dieser Zeit abgeschaltet, bzw. reduziert werden, um eine Überheizung und damit Schädigung der Sonde zu vermeiden. Die angegebene Maximalzeit berücksichtigt die Fertigungsstreuung, Alterungseffekte des Heizerwiderstands sowie kritische Umgebungsbedingungen bei dem spezifizierten Heizspannungsverlauf und ist typischerweise für eine Bordnetzspannung oberhalb von 12V ausgelegt.

Die Diagnose von Leitungsunterbrechungen an der äußeren Pumpelektrode, inneren Pumpelektrode und Referenzelektrode erfolgt über die kontinuierliche Bewertung der gemessenen Widerstände der Nernst- und Pumpzelle nach Ablauf der max. Aufheizzeit. Der Freigabezeitpunkt der Diagnose von Leitungsunterbrechungen stellt somit typischerweise den Überhitzungsschutz des Sensors sicher, da nach einer OL-Fehlererkennung die Sondenheizung abgeschaltet, bzw. reduziert wird.

Die Heizleistungsdiagnose basiert ebenfalls auf einer von dem Widerstand der Nernstzelle abgeleiteten Temperatur. Es kann daher nicht eindeutig unterschieden werden, ob der Widerstand der Sondenkeramik durch zu geringe Temperatur noch außerhalb des messbaren Bereiches (möglicher Heizleistungsfehler) liegt oder ob eine offene Signal-Leitung (OL-Fehler) an der Nernstzelle vorliegt. Bei der Homologation eines Fahrzeugs muss der Behörde demonstriert werden, dass ein grenzwertig innerhalb der Spezifikation liegender Heizer (WPA- bzw. Worst Performance Acceptable Heizer) durch die Heizleistungsdiagnose robust von einem zu schwachen Heizer (BPU- bzw. Best Performance Unacceptable Heizer) unterschieden werden kann. Kritisch ist hierbei, dass bei Freigabe der Diagnose von Signalleitungsunterbrechungen aufgrund einer zu kalten Sonde, welche sich aber noch sehr dynamisch im Aufheizvorgang befindet, nicht fälschlicherweise ein OL-Fehler angezeigt wird.

Trotz der durch diese Sensoren und Verfahren zu deren Funktionskontrolle bewirkten Vorteile beinhalten diese noch Verbesserungspotential. So muss bei der Homologation eines Fahrzeuges anhand unterschiedlicher Zusatzwiderstände im Heizerschaltkreis ein WPA- von einem BPU-Heizer unterschieden werden. Hardwarestreuungen zwischen den Fahrzeugen (Kabelbaum, Sonden, usw.) können dazu führen, dass kein konkreter Zusatzwiderstand für den Heizerschaltkreis genannt werden kann, um den Heizleistungsfehler (BPU-Heizer) zuverlässig zu demonstrieren. Es verbleibt nur ein sehr schmaler Korridor (ca. 50 mOhm) für eine zuverlässige Heizleistungsfehlererkennung, welcher durch Hardwarestreuungen sehr leicht verlassen wird. Hierdurch können Mehraufwände für Messungen im Rahmen von ca. 3 Tagen pro Demonstrationsfahrzeug entstehen, um einen fahrzeugindividuellen BPU-Heizer-Zusatzwiderstand neu zu bestimmen.

Ein Verfahren nach dem Oberbegriff des Anspruchs 1 ist aus der DE 10 2012 224 374 A1 bekannt.

### Offenbarung der Erfindung

Es wird daher ein Verfahren zum Betreiben eines Sensors zur Erfassung mindestens einer Eigenschaft eines Messgases in einem Messgasraum vorgeschlagen, welches die Nachteile bekannter Verfahren zum Betreiben dieser Sensoren zumindest weitgehend vermeidet und welches insbesondere geeignet ist, das Fehler-Pin-Pointing zwischen einer offenen Signal-Leitung und einem Heizleistungsfehler (kalte Sonde bzw. zu langsam aufheizende Sonde) zu verbessern sowie im Fall einer Leitungsunterbrechung an Pump- oder Nernstzelle (APES- bzw. RE-Leitung) einen sicheren Heizungsersatzbetrieb zu gewährleisten.

Ein erfindungsgemäßes Verfahren zum Betreiben eines Sensors zur Erfassung mindestens einer Eigenschaft eines Messgases in einem Messgasraum, insbesondere zur Erfassung eines Anteils einer Gaskomponente in dem Messgas, wobei der Sensor ein Sensorelement zur Erfassung der Eigenschaft des Messgases aufweist, wobei das Sensorelement mindestens eine Nernstzelle, mindestens eine Pumpzelle und mindestens ein Heizelement aufweist, umfasst die folgenden Schritte, bevorzugt in der angegebenen Reihenfolge:
a) Beheizen des Sensorelements mittels des Heizelements für eine vorbestimmte Heizdauer,
b) Erfassen eines elektrischen Widerstands der Nernstzelle während der vorbestimmten Heizdauer und Erzeugen eines den Widerstand der Nernstzelle anzeigenden Signals,
c) Erfassen eines elektrischen Widerstands der Pumpzelle während der vorbestimmten Heizdauer und Erzeugen eines den Widerstand der Pumpzelle anzeigenden Signals,
d) Auswerten eines zeitlichen Verlaufs der den Widerstand der Pump- und Nernstzelle anzeigenden Signale, wobei überprüft wird, ob das den Widerstand der Pumpzelle und/oder Nernstzelle anzeigende Signal einen Widerstandschwellwert innerhalb der vorbestimmten Heizdauer unterschreitet, wobei
e) falls die Auswertung ergibt, dass das den Widerstand der Nernstzelle anzeigende Signal den Widerstandschwellwert nicht innerhalb der vorbestimmten Heizdauer unterschreitet, das den Widerstand der Pumpzelle anzeigende Signal den Widerstandschwellwert jedoch bereits unterschritten hat, eine Temperatur des Sensorelements basierend auf dem den Widerstand der Pumpzelle anzeigenden Signal geregelt wird,
f) falls bis zu einer Freigabe der Diagnose von Leitungsunterbrechungen das den Widerstand der Nernstzelle anzeigende Signal den Widerstandschwellwert noch unterschreiten sollte, ein regulärer Heizbetrieb mittels Temperaturregelung basierend auf dem Widerstand der Nernstzelle durchgeführt wird.

Anhand des Pumpzellenwiderstands, der zusätzlich als Sensortemperaturinformation verwendet wird, kann deutlich früher als bisher festgestellt werden, ob ein Aufheizen des Sensors erfolgt. Gleichzeitig kann ein Überhitzen des Sensors bei einer Verlängerung der Aufheizphase über die vorbestimmte Heizdauer hinaus ausgeschlossen werden, da eine Temperaturregelung basierend auf dem Innenwiderstand der Pumpzelle bei fehlendem Temperatursignal bzw. Innenwiderstand der Nernstzelle erfolgt. Die vorbestimmte Heizdauer ist die maximal erlaubte Aufheizdauer ohne Sensortemperaturinformation, bevor der Sensor in einen sicheren Heizelementbetrieb zur Vermeidung einer Überhitzung überführt werden muss.

Bei einem OL-Fehler an der Leitung IPE kann weder an der Nernst- noch an der Pumpzelle eine Widerstandsänderung vom max. erfassbaren Widerstandswert innerhalb der vorbestimmten Heizdauer gemessen werden. Um diesen Fehlerfall auszuschließen, muss innerhalb der vorbestimmten Heizdauer ein bestimmter Widerstandschwellwert für Pump- oder Nernstzelle unterschritten werden. Der zeitliche Verlauf des Widerstands von Pump- und Nernstzelle wird dazu beobachtet bzw. erfasst.

Im Aufheizvorgang des Sensors erfolgt eine messbare Widerstandsänderung der Nernstzelle dabei zu einem späteren Zeitpunkt als bei der Pumpzelle, weshalb über die Pumpzelle bei gleichem Widerstandschwellwert früher eine gültige Temperaturinformation des Sensors vorliegt und damit ein Überhitzen des Sensors ausgeschlossen werden kann.

Der Widerstandschwellwert definiert einen Widerstandswert, unterhalb dessen von einer gültigen Temperaturinformation für Pumpzelle und/oder Nernstzelle auszugehen ist.

Das Verfahren kann weiterhin Anordnen unterschiedlich großer Zusatzwiderstände in einem Schaltkreis des Heizelements umfassen, wobei die Schritte a) bis f) jeweils mit den unterschiedlich großen Zusatzwiderständen durchgeführt werden.

Das oben beschriebene Verfahren ermöglicht somit eine Optimierung der Heizstrategie für Sensoren mit abgeschwächter Heizleistung, z.B. durch Zusatzwiderstände im Heizerschaltkreis, unter Einbezug des gemessenen Pumpzellenwiderstands und verbessert den Überhitzungsschutz im Fall von OL-Fehler durch eine Temperaturregelung basierend auf dem Innenwiderstand der Pumpzelle. Dadurch muss die Freigabe der Diagnose von Leitungsunterbrechungen nicht mehr so ausgelegt werden, um den Überhitzungsschutz bei OL-Fehler zu gewährleisten, sondern kann mit einem zeitlichen Verzug von einigen Sekunden nach Ablauf der vorbestimmten Heizdauer erfolgen, um eine zusätzliche Verbesserung des Fehler-Pin-Pointings zwischen einer offenen Signal-Leitung und einem Heizleistungsfehler darzustellen. Ursächlich dafür ist, dass die Widerstandswerte für Nernst- und Pumpzelle im Fall einer abgeschwächten Heizleistung nach einer geringen Verzögerung der Diagnosefreigabe bereits deutlich niedrigere Werte aufweisen.

Bei der Homologation eines Fahrzeuges muss anhand unterschiedlicher Zusatzwiderstände im Heizerschaltkreis ein WPA- von einem BPU-Heizer unterschieden werden. Da die Pumpzelle einer Zweizellersonde typischerweise einen geringeren Innenwiderstand aufweist als die Nernstzelle bei gleicher Temperatur, kann anhand dessen Signalverlaufs frühzeitig das Aufheizen des Sensorelements festgestellt werden. Dies kann genutzt werden, die Aufheizphase zu verlängern, da in diesem Fall ein OL-IPE-Fehler und damit ein Überhitzen des Sensors auszuschließen ist. Hierdurch kann für den BPU-Heizer ein größerer Zusatzwiderstand gewählt werden, um die Robustheit der korrekten Fehlererkennung bei der Behördendemonstration zu erhöhen, und zusätzliche Messaufwände zu minimieren. Der oben beschriebene zeitliche Versatz für die Unterschreitung des Widerstandschwellwerts der Nernstzelle und Pumpzelle, ein Überhitzen des Sensors kann dadurch ausgeschlossen und die Heizstrategie optimiert werden, sowie die Entkopplung des Überhitzungsschutzes von der Diagnosefreigabe von Leitungsunterbrechungen, ermöglicht die gezielte Wahl eines (höheren) Zusatzwiderstandes, um einen WPA-Heizer von einem BPU-Heizer robust, unter Einbezug aller möglichen Betriebs- und Fahrzeugstreuungen, unterscheiden zu können.

Der Widerstandschwellwert, unterhalb dessen von einer gültigen Temperaturinformation für Pumpzelle und/oder Nernstzelle auszugehen ist, kann 4000 Ohm bis 8000 Ohm und bevorzugt 7000 Ohm bis 8000 Ohm sein.

Bei vergrößertem Widerstandmessbereich sind deutlich größere Werte von 50 kOhm bis 150 kOhm für den Widerstandschwellwert bevorzugt anzuwenden. Damit kann zuverlässig ein Aufheizen des Sensorelements erfasst werden. Das Verfahren kann weiterhin Feststellen einer Unterbrechung einer Leitung zu der Nernstzelle und/oder Pumpzelle nach der Freigabe der Diagnose von Leitungsunterbrechungen und Sicherstellung des Überhitzungsschutzes des Sensorelements umfassen, falls das den Widerstand der Nernstzelle und/oder Pumpzelle anzeigende Signal den Widerstandschwellwert nicht innerhalb der vorbestimmten Heizdauer unterschreitet.

Bei Feststellen einer Unterbrechung der Leitung zu der Nernstzelle kann eine Temperatur des Sensorelements basierend auf dem den Widerstand der Pumpzelle anzeigenden Signal geregelt werden. Anstatt einer konstanten Heizerspannung wie bisher kann bei fehlendem Temperatursignal bzw. Innenwiderstand der Nernstzelle, eine Temperaturregelung basierend auf dem Innenwiderstand der Pumpzelle erfolgen. Da in diesem Systemzustand keine Bereitstellung eines Lambda-Signals erfolgt, hat ein möglicherweise ausgeprägteres Alterungsverhalten der Pumpzelle keinen negativen Effekt auf die Einspritzregelung, allerdings kann ein mögliches Überhitzen der Sonde ausgeschlossen werden.

Das Verfahren kann weiterhin Feststellen einer intakten Leitung zu der Nernstzelle und/oder Pumpzelle nach der Freigabe der Diagnose von Leitungsunterbrechungen umfassen, falls das den Widerstand der Nernstzelle und/oder Pumpzelle anzeigende Signal den Widerstandschwellwert innerhalb der vorbestimmten Heizdauer unterschreitet. Dadurch liegt zügig eine gültige Temperaturinformation des Sensors vor, ein mögliches Überhitzen der Sonde ist ausgeschlossen und die Heizstrategie kann frühzeitig für Sensoren mit abgeschwächter Heizleistung optimiert werden.

In einem weiteren Aspekt der vorliegenden Erfindung wird ein System, umfassend mindestens einen Sensors zur Erfassung mindestens einer Eigenschaft eines Messgases in einem Messgasraum, insbesondere zur Erfassung eines Anteils einer Gaskomponente in dem Messgas, wobei der Sensor ein Sensorelement zur Erfassung der Eigenschaft des Messgases, wobei das Sensorelement mindestens eine Nernstzelle, mindestens eine Pumpzelle und mindestens ein Heizelement aufweist, und mindestens eine Steuerung aufweist, vorgeschlagen. Die Steuerung umfasst mindestens einen Prozessor. Die Steuerung ist eingerichtet, um die Verfahrensschritte nach dem Verfahren wie es oben beschrieben wurde oder im Folgenden noch beschrieben wird, durchzuführen.

In einem weiteren Aspekt der vorliegenden Erfindung wird ein Computerprogramm vorgeschlagen, welches eingerichtet ist, um bei Ablauf auf einem Computer oder Computer-Netzwerk das Verfahren wie es oben beschrieben wurde oder im Folgenden noch beschrieben wird, durchzuführen.

In einem weiteren Aspekt der vorliegenden Erfindung wird ein Computerprogramm mit Programmcode-Mitteln vorgeschlagen. Das Computerprogramm ist eingerichtet, um das Verfahren wie es oben beschrieben wurde oder im Folgenden noch beschrieben wird durchzuführen, wenn das Programm auf einem Computer oder Computer-Netzwerk ausgeführt wird.

In einem weiteren Aspekt der vorliegenden Erfindung wird ein Datenträger, auf dem eine Datenstruktur gespeichert ist, vorgeschlagen. Die Datenstruktur ist eingerichtet, um nach einem Laden in einen Arbeits- und/oder Hauptspeicher eines Computers oder Computer-Netzwerkes das Verfahren wie es oben beschrieben wurde oder im Folgenden noch beschrieben wird auszuführen.

In einem weiteren Aspekt der vorliegenden Erfindung wird ein Computerprogramm-Produkt mit auf einem maschinenlesbaren Träger gespeicherten Programmcode-Mitteln vorgeschlagen, um das Verfahren wie es oben beschrieben wurde oder im Folgenden noch beschrieben wird durchzuführen, wenn das Programm auf einem Computer oder Computer-Netzwerk ausgeführt wird.

Dabei wird unter einem Computer-Programmprodukt das Programm als handelbares Produkt verstanden. Es kann grundsätzlich in beliebiger Form vorliegen, so zum Beispiel auf Papier oder einem computerlesbaren Datenträger und kann insbesondere über ein Datenübertragungsnetz verteilt werden. Insbesondere können die Programmcode-Mittel auf einem computerlesbaren Datenträger und/oder einem computerlesbaren Speichermedium gespeichert sein. Die Begriffe "computerlesbarer Datenträger" und "computerlesbares Speichermedium", wie sie hier verwendet werden, können sich insbesondere auf nicht-transitorische Datenspeicher beziehen, beispielsweise auf ein Hardware-Datenspeichermedium, auf welchem Computer-ausführbare Instruktionen gespeichert sind. Der computerlesbare Datenträger oder das computerlesbare Speichermedium können insbesondere ein Speichermedium wie ein Random-Access Memory (RAM) und/oder ein Read-Only Memory (ROM) sein oder umfassen.

In einem weiteren Aspekt der vorliegenden Erfindung wird ein moduliertes Datensignal vorgeschlagen, wobei das modulierte Datensignal von einem Computersystem oder Computernetzwerk ausführbare Instruktionen zum Ausführen eines Verfahrens wie es oben beschrieben wurde oder im Folgenden noch beschrieben wird umfasst.

Schließlich betrifft die Erfindung auch einen Sensor zur Erfassung mindestens einer Eigenschaft eines Messgases in einem Messgasraum, insbesondere zur Erfassung eines Anteils einer Gaskomponente in dem Messgas oder einer Temperatur des Messgases, umfassend ein Sensorelement zur Erfassung der Eigenschaft des Messgases, wobei das Sensorelement mindestens eine Nernstzelle, mindestens eine Pumpzelle und mindestens ein Heizelement aufweist, wobei der Sensor weiterhin ein elektronisches Steuergerät mit dem erfindungsgemäßen Computerprogramm zur Durchführung des erfindungsgemäßen Verfahrens aufweist.

Beispielsweise weist das Sensorelement einen Festelektrolyten, eine erste Elektrode, eine zweite Elektrode, eine dritte Elektrode und eine vierte Elektrode auf, wobei die erste Elektrode und die zweite Elektrode derart mit dem Festelektrolyten verbunden sind, dass die erste Elektrode, die zweite Elektrode und der Festelektrolyt eine Pumpzelle bilden, wobei die dritte Elektrode und die vierte Elektrode derart mit dem Festelektrolyten verbunden sind, dass die dritte Elektrode, die vierte Elektrode und der Festelektrolyt eine Nernstzelle bilden.

Unter einem Festelektrolyten ist im Rahmen der vorliegenden Erfindung ein Körper oder Gegenstand mit elektrolytischen Eigenschaften, also mit Ionen leitenden Eigenschaften, zu verstehen. Insbesondere kann es sich um einen keramischen Festelektrolyten handeln. Dies umfasst auch das Rohmaterial eines Festelektrolyten und daher die Ausbildung als so genannter Grünling oder Braunling, der erst nach einem Sintern zu einem Festelektrolyten wird. Insbesondere kann der Festelektrolyt als Festelektrolytschicht oder aus mehreren Festelektrolytschichten ausgebildet sein. Unter einer Schicht ist im Rahmen der vorliegenden Erfindung eine einheitliche Masse in flächenhafter Ausdehnung einer gewissen Höhe zu verstehen, die über, unter oder zwischen anderen Elementen liegt.

Unter einer Elektrode ist im Rahmen der vorliegenden Erfindung allgemein ein Element zu verstehen, welches in der Lage ist, den Festelektrolyten derart zu kontaktieren, dass durch den Festelektrolyten und die Elektrode ein Strom aufrechterhalten werden kann. Dementsprechend kann die Elektrode ein Element umfassen, an welchem die Ionen in den Festelektrolyten eingebaut und/oder aus dem Festelektrolyten ausgebaut werden können. Typischerweise umfassen die Elektroden eine Edelmetallelektrode, welche beispielsweise als Metall-Keramik-Elektrode auf dem Festelektrolyten aufgebracht sein kann oder auf andere Weise mit dem Festelektrolyten in Verbindung stehen kann. Typische Elektrodenmaterialien sind Platin-Cermet-Elektroden. Auch andere Edelmetalle, wie beispielsweise Gold oder Palladium, sind jedoch grundsätzlich einsetzbar.

Unter einem Heizelement ist im Rahmen der vorliegenden Erfindung ein Element zu verstehen, das zum Erwärmen des Festelektrolyten und der Elektroden auf mindestens ihre Funktionstemperatur und vorzugsweise auf ihre Betriebstemperatur dient. Die Funktionstemperatur ist diejenige Temperatur, ab der der Festelektrolyt für Ionen leitend wird und die ungefähr 350 °C beträgt. Davon ist die Betriebstemperatur zu unterscheiden, die diejenige Temperatur ist, bei der das Sensorelement üblicherweise betrieben wird und die höher ist als die Funktionstemperatur. Die Betriebstemperatur kann beispielsweise von 700 °C bis 950 °C sein. Das Heizelement kann einen Heizbereich und mindestens eine Zuleitungsbahn umfassen. Unter einem Heizbereich ist im Rahmen der vorliegenden Erfindung der Bereich des Heizelements zu verstehen, der in dem Schichtaufbau entlang einer zu der Oberfläche des Sensorelements senkrechten Richtung mit einer Elektrode überlappt. Üblicherweise erwärmt sich der Heizbereich während des Betriebs stärker als die Zuleitungsbahn, so dass diese unterscheidbar sind. Die unterschiedliche Erwärmung kann beispielsweise dadurch realisiert werden, dass der Heizbereich einen höheren elektrischen Widerstand aufweist als die Zuleitungsbahn. Der Heizbereich und/oder die Zuleitung sind beispielsweise als elektrische Widerstandsbahn ausgebildet und erwärmen sich durch Anlegen einer elektrischen Spannung. Das Heizelement kann beispielsweise aus einem Platin-Cermet hergestellt sein.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
Figur 1 einen prinzipiellen Aufbau eines erfindungsgemäßen Sensors,
Figur 2 ein Ablaufdiagramm eines erfindungsgemäßen Verfahrens zum Betreiben des Sensors, und
Figur 3 beispielhafte Signalverläufe bei dem Sensor während eines Betriebs des Heizelements.

### Ausführungsformen der Erfindung

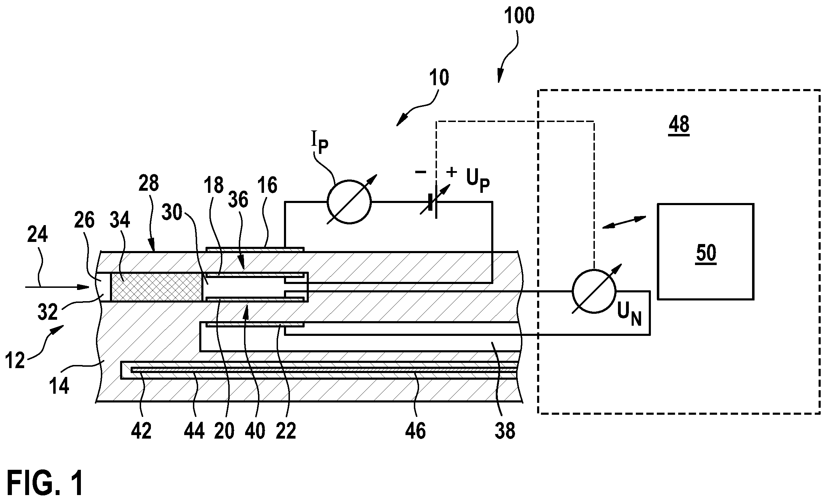

Figur 1 zeigt einen prinzipiellen Aufbau eines erfindungsgemäßen Sensors 10. Der in Figur 1 dargestellte Sensor 10 kann zum Nachweis von physikalischen und/oder chemischen Eigenschaften eines Messgases verwendet werden, wobei eine oder mehrere Eigenschaften erfasst werden können. Die Erfindung wird im Folgenden insbesondere unter Bezugnahme auf eine qualitative und/oder quantitative Erfassung einer Gaskomponente des Messgases beschrieben, insbesondere unter Bezugnahme auf eine Erfassung eines Sauerstoffanteils in dem Messgas. Der Sauerstoffanteil kann beispielsweise in Form eines Partialdrucks und/oder in Form eines Prozentsatzes erfasst werden. Grundsätzlich sind jedoch auch andere Arten von Gaskomponenten erfassbar, wie beispielsweise Stickoxide, Kohlenwasserstoffe und/oder Wasserstoff. Alternativ oder zusätzlich sind jedoch auch andere Eigenschaften des Messgases erfassbar. Die Erfindung ist insbesondere im Bereich der Kraftfahrzeugtechnik einsetzbar, so dass es sich bei dem Messgasraum insbesondere um einen Abgastrakt einer Brennkraftmaschine handeln kann, bei dem Messgas insbesondere um ein Abgas. Beispielsweise ist der Sensor 10 als Lambdasonde ausgebildet, insbesondere als Breitbandlambdasonde, wie nachstehend ausführlicher erläutert wird. Es wird jedoch explizit betont, dass es sich bei dem Sensor 10 alternativ um eine Sprungsonde handeln kann.

Der Sensor 10 weist ein Sensorelement 12 auf. Das Sensorelement 12 kann als keramischer Schichtaufbau ausgebildet sein, wie nachstehend ausführlicher beschrieben wird. Das Sensorelement 12 weist einen Festelektrolyten 14, eine erste Elektrode 16, eine zweite Elektrode 18, eine dritte Elektrode 20 und eine vierte Elektrode 22 auf. Der Festelektrolyt 14 kann aus mehreren keramischen Schichten in Form von Festelektrolytschichten zusammengesetzt sein oder mehrere Festelektrolytschichten umfassen. Beispielsweise umfasst der Festelektrolyt 14 eine Pumpfolie oder Pumpschicht, eine Zwischenfolie oder Zwischenschicht und eine Heizfolie bzw. Heizschicht, die übereinander bzw. untereinander angeordnet sind. Die Bezeichnung der Elektroden 16, 18, 20, 22 soll keine Gewichtung ihrer Bedeutung angeben, sondern dient lediglich dazu, diese begrifflich zu unterscheiden.

Das Sensorelement 12 weist ferner einen Gaszutrittsweg 24 auf. Der Gaszutrittsweg 24 weist ein Gaszutrittsloch 26 auf, das sich von einer Oberfläche 28 des Festelektrolyten 14 ins Innere des Schichtaufbaus des Sensorelements 12 erstreckt. In dem Festelektrolyten 14 ist ein Elektrodenhohlraum 30 vorgesehen, der das Gaszutrittsloch 26 umgibt, beispielsweise ringförmig oder rechteckig. Der Elektrodenhohlraum 30 ist Teil des Gaszutrittswegs 24 und steht über das Gaszutrittsloch 26 mit dem Messgasraum in Verbindung. Beispielsweise erstreckt sich das Gaszutrittsloch 26 als zylindrisches Sackloch senkrecht zu der Oberfläche 28 des Festelektrolyten 14 in das Innere des Schichtaufbaus des Sensorelements 12. Insbesondere ist der Elektrodenhohlraum 30 im Wesentlichen ringförmig oder rechteckig ausgebildet und bei einer Betrachtung in einer Querschnittsansicht von drei Seiten von dem Festelektrolyten 14 begrenzt. Zwischen dem Gaszutrittsloch 26 und dem Elektrodenhohlraum 30 ist ein Kanal 32 angeordnet, welcher ebenfalls Bestandteil des Gaszutrittswegs 24 ist. In diesem Kanal 32 ist eine Diffusionsbarriere 34 angeordnet, welche ein Nachströmen von Gas aus dem Messgasraum in den Elektrodenhohlraum 30 vermindert oder sogar verhindert und lediglich eine Diffusion ermöglicht.

Die erste Elektrode 16 ist auf der auf der Oberfläche 28 des Festelektrolyten 14 angeordnet. Die erste Elektrode 16 kann das Gaszutrittsloch 26 ringförmig umgeben und von dem Messgasraum beispielsweise durch eine nicht näher gezeigte gasdurchlässige Schutzschicht getrennt sein. Die zweite Elektrode 18 ist in dem Elektrodenhohlraum 30 angeordnet. Die zweite Elektrode 18 kann ebenfalls ringförmig ausgestaltet sein und rotationssymmetrisch um das Gaszutrittsloch 26 angeordnet sein. Beispielsweise sind die erste Elektrode 16 und die zweite Elektrode 18 koaxial zu dem Gaszutrittsloch 26 angeordnet. Die erste Elektrode 16 und die zweite Elektrode 18 sind derart mit dem Festelektrolyten 14 und insbesondere mit der Pumpschicht verbunden, insbesondere elektrisch verbunden, dass die erste Elektrode 16, die zweite Elektrode 18 und der Festelektrolyt 14 eine Pumpzelle 36 bilden. Entsprechend können die erste Elektrode 16 auch als äußere Pumpelektrode und die zweite Elektrode 18 als innere Pumpelektrode bezeichnet werden. Über die Diffusionsbarriere 34 lässt sich ein Grenzstrom der Pumpzelle 36 einstellen. Der Grenzstrom stellt somit einen Stromfluss zwischen der ersten Elektrode 16 und der zweiten Elektrode 18 über den Festelektrolyten 14 dar.

Das Sensorelement 12 weist weiterhin einen Referenzgasraum 38 auf. Der Referenzgasraum 38 kann sich senkrecht zu einer Erstreckungsrichtung des Gaszutrittslochs 26 in das Innere des Festelektrolyten 14 erstrecken. Wie oben erwähnt, ist das Gaszutrittsloch 26 zylindrisch ausgebildet, so dass die Erstreckungsrichtung des Gaszutrittslochs 26 parallel zu einer Zylinderachse des Gaszutrittslochs 26 verläuft. In diesem Fall erstreckt sich der Referenzgasraum 38 senkrecht zu der Zylinderachse des Gaszutrittslochs 26. Es wird ausdrücklich erwähnt, dass der Referenzgasraum 38 auch in einer gedachten Verlängerung des Gaszutrittslochs 26 und somit weiter im Inneren des Festelektrolyten 14 angeordnet sein kann. Der Referenzgasraum 38 muss nicht als makroskopischer Referenzgasraum ausgebildet sein. Beispielsweise kann der Referenzgasraum 38 als so genannte gepumpte Referenz ausgeführt sein, das heißt als künstliche Referenz.

Die dritte Elektrode 20 ist ebenfalls in dem Elektrodenhohlraum 30 angeordnet. Beispielsweise liegt die dritte Elektrode 20 der zweiten Elektrode 18 gegenüber. Die vierte Elektrode 22 ist in dem Referenzgasraum 38 angeordnet. Die dritte Elektrode 20 und die vierte Elektrode 22 sind derart mit Festelektrolyten 14 verbunden, dass die dritte Elektrode 20, die vierte Elektrode 22 und derjenige Teil des Festelektrolyten 14 zwischen der dritten Elektrode 22 und der vierten Elektrode 22 eine Nernstzelle 40 bilden. Mittels der Pumpzelle 36 kann beispielsweise ein Pumpstrom durch die Pumpzelle 36 derart eingestellt werden, dass in dem Elektrodenhohlraum 30 die Bedingung λ (Lambda)= 1 oder eine andere bekannte Zusammensetzung herrscht. Diese Zusammensetzung wird wiederum von der Nernstzelle 40 erfasst, indem eine Nernstspannung U_{N} zwischen der dritten Elektrode 20 und der vierten Elektrode 22 gemessen wird. Da in dem Referenzgasraum 38 eine bekannte Gaszusammensetzung vorliegt bzw. diese einem Sauerstoffüberschuss ausgesetzt ist, kann anhand der gemessenen Spannung auf die Zusammensetzung in dem Elektrodenhohlraum 30 geschlossen werden.

In der Verlängerung der Erstreckungsrichtung des Gaszutrittslochs 26 ist ein Heizelement 42 in dem Schichtaufbau des Sensorelements 12 angeordnet. Das Heizelement 42 weist einen Heizbereich 44 und elektrische Zuleitungsbahnen 46 auf. Der Heizbereich 44 ist beispielsweise mäanderförmig ausgebildet. Das Heizelement 42 ist in dem Festelektrolyten 14 zwischen der Zwischenschicht und der Heizschicht angeordnet. Es wird ausdrücklich erwähnt, dass das Heizelement 42 beidseitig von einer dünnen Schicht aus einem elektrisch isolierenden Material, wie beispielsweise Aluminiumoxid, umgeben ist, auch wenn dies in den Figuren nicht näher dargestellt ist. Mit anderen Worten ist zwischen der Zwischenschicht und dem Heizelement 42 sowie zwischen dem Heizelement 42 und der Heizschicht die dünne Schicht aus dem elektrisch isolierenden Material angeordnet. Da eine derartige Schicht beispielsweise aus dem oben genannten Stand der Technik bekannt ist, wird diese nicht näher beschrieben. Für weitere Details bezüglich der Schicht aus dem elektrisch isolierenden Material wird daher auf den oben genannten Stand der Technik, verwiesen, dessen Inhalt betreffend die Schicht aus dem elektrischen Material durch Verweis hierin eingeschlossen ist.

Wie in Figur 1 gezeigt ist, ist der Sensor 10 mit einem elektronischen Steuergerät 48 verbunden. Das elektronische Steuergerät 48 weist ein Regelgerät 50 zum Regeln einer Nernstspannung U_{N} der Nernstzelle 40 auf. Der Sensor 10 und das Steuergerät 48 sind Teil einer Sensoranordnung bzw. eines Systems 100, das den Sensor 10 sowie das Steuergerät 48 umfasst. Die an die Pumpzelle 36 angelegte Pumpspannung U_{P} stellt die Stellgröße des elektronischen Steuergeräts 48 für die Regelung der Nernstspannung U_{N} dar. Dabei ist die Nernstspannung U_{N} gleichzeitig die Regelgröße. Auf diese Weise kann darüber hinaus der von der Sauerstoffkonzentration abhängige Pumpstrom I_{P}, der in die Pumpzelle 36 hineinfließt oder aus dieser herausfließt, bestimmt werden, der den Sauerstoffgehalt anzeigt.

Die Heizleistungsdiagnose bei dem Sensor 10 basiert ebenfalls auf einer von dem Widerstand der Nernstzelle 40 abgeleiteten Temperatur. Es kann daher nicht eindeutig unterschieden werden, ob der Widerstand der Sondenkeramik durch zu geringe Temperatur noch außerhalb des messbaren Bereiches, d.h. möglicher Fehler des Heizelements 42, liegt oder ob eine offene Signal-Leitung (OL-Fehler) an der Nernstzelle 40 vorliegt. Bei der Homologation eines Fahrzeugs muss der Behörde demonstriert werden, dass ein grenzwertig innerhalb der Spezifikation liegender Heizer (WPA- bzw. Worst Performance Acceptable Heizer) durch die Heizleistungsdiagnose robust von einem zu schwachen Heizer (BPU- bzw. Best Performance Unacceptable Heizer) unterschieden werden kann. Kritisch ist hierbei, dass bei Freigabe der Diagnose von Signalleitungsunterbrechungen aufgrund einer zu kalten Sonde, welche sich aber noch sehr dynamisch im Aufheizvorgang befindet, nicht fälschlicherweise ein OL-Fehler angezeigt wird. Hardwarestreuungen zwischen den Fahrzeugen (Kabelbaum, Sonden, usw.) können dazu führen, dass kein konkreter Zusatzwiderstand für den Heizerschaltkreis genannt werden kann, um den Heizleistungsfehler (BPU-Heizer) zuverlässig zu demonstrieren. Die Ursache liegt darin, dass nur ein sehr schmaler Korridor von ca. 50 mOhm für eine zuverlässige Heizleistungsfehlererkennung verbleibt, welcher durch Hardwarestreuungen sehr leicht verlassen wird. Hierdurch können Mehraufwände für Messungen im Rahmen von ca. 3 Tagen pro Demonstrationsfahrzeug entstehen, um einen fahrzeugindividuellen BPU-Heizer-Zusatzwiderstand neu zu bestimmen.

Um auf einfache Weise eindeutig zu erkennen, ob ein Aufheizen des Sensors 10 erfolgt, wird das nachstehende Verfahren vorgeschlagen.

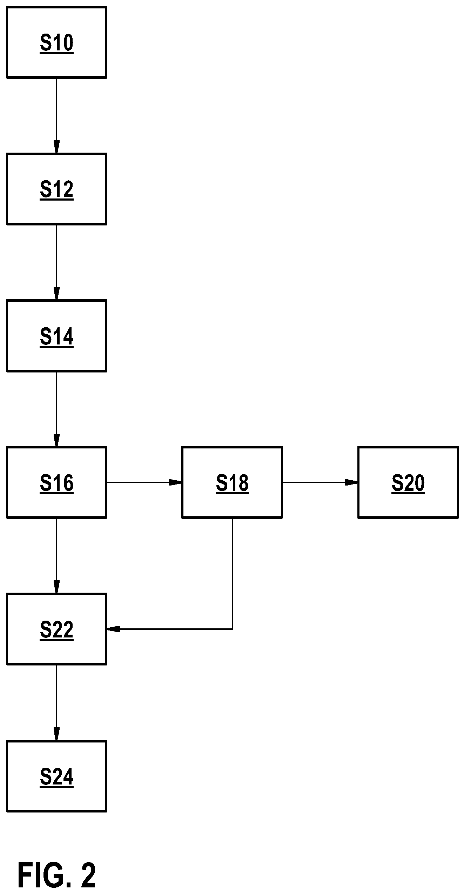

Figur 2 zeigt ein Ablaufdiagramm eines erfindungsgemäßen Verfahrens zum Betreiben des Sensors 10. Wie nachstehend ausführlicher erläutert wird, nutzt das Verfahren die Erkenntnis, dass anhand des Pumpzellenwiderstands deutlich früher als bisher festgestellt werden kann, ob ein Aufheizen des Sensors 10 erfolgt. Gleichzeitig kann ein Überhitzen des Sensors 10 bei einer Verlängerung der Aufheizphase ausgeschlossen werden. Dadurch muss die Freigabe der Diagnose von Leitungsunterbrechungen nicht mehr so ausgelegt werden, um den Überhitzungsschutz bei OL-Fehler zu gewährleisten, sondern kann mit einem zeitlichen Verzug von einigen Sekunden nach Ablauf der vorbestimmten Heizdauer erfolgen, um eine zusätzliche Verbesserung des Fehler-Pin-Pointings zwischen einer offenen Signal-Leitung und einem Heizleistungsfehler darzustellen.

Das Verfahren beginnt mit Schritt S10, in dem das Sensorelement 12 und somit der Sensor 10 mittels des Heizelements 42 für eine vorbestimmte Heizdauer beheizt wird. Die vorbestimmte Heizdauer ist die maximal erlaubte Aufheizdauer ohne Temperaturinformation über das Sensorelement 12, bevor der Sensor 10 in einen sicheren Heizelementbetrieb zur Vermeidung einer Überhitzung überführt werden muss. In Schritt S12, der parallel bzw. gleichzeitig mit Schritt S10 durchgeführt werden kann, wird ein elektrischer Widerstand der Nernstzelle 40 während der vorbestimmten Heizdauer erfasst und ein den Widerstand der Nernstzelle 40 anzeigendes Signal erzeugt. In Schritt S14, der parallel bzw. gleichzeitig mit Schritt S10 durchgeführt werden kann, wird ein elektrischer Widerstand der Pumpzelle 36 während der vorbestimmten Heizdauer erfasst und ein den Widerstand der Pumpzelle 36 anzeigendes Signal erzeugt. In Schritt S16 wird ein zeitlicher Verlauf des den Widerstand der Pumpzelle 36 anzeigenden Signals ausgewertet. Gleichzeitig erfolgt die Auswertung eines zeitlichen Verlaufs des den Widerstand der Nernstzelle 40 anzeigenden Signals. Im Rahmen der Auswertung bzw. dabei wird überprüft, ob das den Widerstand der Pumpzelle 36 und/oder Nernstzelle 40 anzeigende Signal einen Widerstandschwellwert innerhalb der vorbestimmten Heizdauer unterschreitet. Der Widerstandschwellwert definiert einen Widerstandswert, unterhalb dessen von einer gültigen Temperaturinformation für Pumpzelle 36 und/oder Nernstzelle 40 auszugehen ist. Der Widerstandschwellwert ist 4000 Ohm bis 8000 Ohm und bevorzugt 7000 Ohm bis 8000 Ohm. Bei vergrößertem Widerstandmessbereich sind deutlich größere Werte von 50 kOhm bis 150 kOhm für den Widerstandschwellwert bevorzugt anzuwenden.

Falls die Auswertung in Schritt S16 ergibt, dass das den Widerstand der Nernstzelle 40 anzeigende Signal den Widerstandschwellwert nicht innerhalb der vorbestimmten Heizdauer unterschreitet, das den Widerstand der Pumpzelle 36 anzeigende Signal den Widerstandschwellwert jedoch bereits unterschritten hat, schreitet das Verfahren zu Schritt S18 fort. In diesem Schritt wird eine Temperatur des Sensorelements 12 basierend auf dem den Widerstand der Pumpzelle 36 anzeigenden Signal geregelt. Dadurch wird ein mögliches Überhitzen des Sensorelements 12 bei einem OL-Fehler ausgeschlossen, gleichzeitig wird der Aufheizvorgang für Sensoren mit abgeschwächter Heizleistung (z.B. durch Zusatzwiderstände im Heizerschaltkreis) und intakten Leitungen begünstigt.

Falls bis zu einer Freigabe der Diagnose von Leitungsunterbrechungen, d.h. einige Sekunden nach Ablauf der vorbestimmten Heizdauer, das den Widerstand der Nernstzelle 40 anzeigende Signal den Widerstandschwellwert weiterhin nicht unterschreitet, schreitet das Verfahren zu Schritt S20 fort und kann eine Unterbrechung einer Leitung zu der Nernstzelle 40 feststellen und enden.

Falls bis zu einer Freigabe der Diagnose von Leitungsunterbrechungen, d.h. einige Sekunden nach Ablauf der vorbestimmten Heizdauer, das den Widerstand der Nernstzelle 40 anzeigende Signal den Widerstandschwellwert noch unterschreiten sollte, wechselt das Verfahren zu Schritt S22 und es wird ein regulärer Heizbetrieb durchgeführt, siehe unten.

Falls die Auswertung in Schritt S16 ergibt, dass die den Widerstand der Pumpzelle 36 und Nernstzelle 40 anzeigende Signale den Widerstandschwellwert beide innerhalb der vorbestimmten Heizdauer unterschreiten, schreitet das Verfahren zu Schritt S22 fort und es wird ein regulärer Heizbetrieb durchgeführt. Nach der Freigabe der Diagnose von Leitungsunterbrechungen, d.h. einige Sekunden nach Ablauf der vorbestimmten Heizdauer, kann das Verfahren zu Schritt S24 fortschreiten und eine intakte Leitung zu der Nernstzelle 40 und/oder Pumpzelle 36 feststellen und enden.

Das Verfahren kann weiterhin Anordnen unterschiedlich großer Zusatzwiderstände in einem Schaltkreis des Heizelements 42 umfassend, wobei die Schritte S10 bis S24 jeweils mit den unterschiedlich großen Zusatzwiderständen durchgeführt werden. Das Anordnen eines solchen Zusatzwiderstands im Schaltkreis des Heizelements 42 kann wahlweise in der Plusleitung des Heizelements 42, der Minusleitung des Heizelements 42 oder in beide genannten Leitungen gleichzeitig erfolgen. So konnte kein Unterschied bezüglich eines Aufheizverhaltens des Sensors 10 durch unterschiedliche Positionierung der Zusatzwiderstände nachgewiesen werden.

Beispielsweise muss bei der Homologation eines Fahrzeuges anhand unterschiedlicher Zusatzwiderstände im Heizerschaltkreis ein WPA- von einem BPU-Heizer unterschieden werden. Da die Pumpzelle einer Zweizellersonde typischerweise einen geringeren Innenwiderstand aufweist als die Nernstzelle bei gleicher Temperatur, kann anhand dessen Signalverlaufs frühzeitig das Aufheizen des Sensorelements festgestellt werden. Dies kann genutzt werden, die Aufheizphase zu verlängern, da in diesem Fall ein OL-IPE-Fehler und damit ein Überhitzen des Sensors frühzeitig auszuschließen ist. Dadurch muss die Freigabe der Diagnose von Leitungsunterbrechungen nicht mehr so ausgelegt werden, um den Überhitzungsschutz bei OL-Fehler zu gewährleisten, sondern kann mit einem zeitlichen Verzug von einigen Sekunden nach Ablauf der vorbestimmten Heizdauer erfolgen, um eine zusätzliche Verbesserung des Fehler-Pin-Pointings zwischen einer offenen Signal-Leitung und einem Heizleistungsfehler darzustellen. Hierdurch kann für den BPU-Heizer ein größerer Zusatzwiderstand gewählt werden, um die Robustheit der korrekten Fehlererkennung bei der Behördendemonstration zu erhöhen, und zusätzliche Messaufwände zu minimieren.

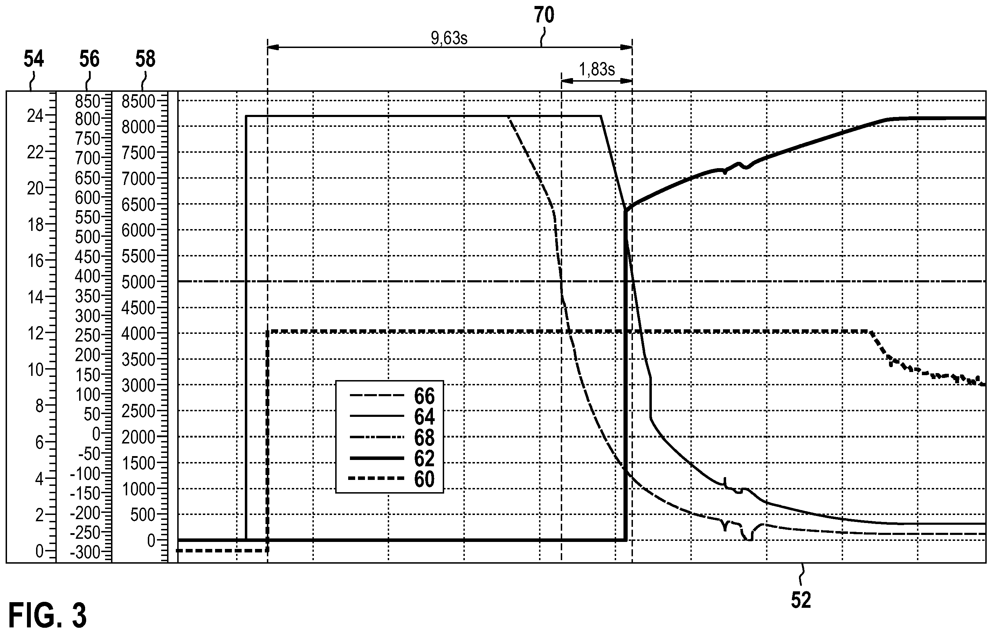

Figur 3 zeigt beispielhafte Signalverläufe bei dem Sensor 10 während eines Betriebs des Heizelements 42. Die dargestellten Signalverläufe verdeutlichen, warum eine Heizungsregelung basierend auf einer Nutzung des Pumpzellenwiderstands bzw. der davon abgeleiteten Temperatur geeignet ist, um das Fehler-Pin-Pointing zwischen einer offenen Signal-Leitung und einem Heizleistungsfehler (kalte Sonde bzw. zu langsam aufheizende Sonde) zu verbessern. In Figur 3 ist auf der X-Achse 52 die Zeit in Sekunden aufgetragen. Auf der ganz links dargestellten Y-Achse 54 ist die an das Heizelement angelegte elektrische Heizspannung (Effektivwert) in V aufgetragen. Auf der zweiten von links dargestellten Y-Achse 56 ist die Temperatur des Sensorelements 12 in °C aufgetragen. Auf der dritten von links dargestellten Y-Achse 58 ist der Widerstand der Nernstzelle 40 sowie der Widerstand der Pumpzelle 36 in Ohm aufgetragen. Die Kurve 60 stellt den zeitlichen Verlauf der an das Heizelement angelegten elektrischen Heizspannung dar. Die Kurve 62 stellt den zeitlichen Verlauf der gemessenen Temperatur über den Nernstzellenwiderstand des Sensorelements 12 dar. Die Kurve 64 stellt den zeitlichen Verlauf des Widerstands der Nernstzelle 40 dar. Die Kurve 66 stellt den zeitlichen Verlauf des Widerstands der Pumpzelle 36 dar. In diesem Beispiel liegt der max. auswertbare Wert für die beiden Kurven 64 und 66 bei ca. 8200 Ohm. Die Kurve 68 stellt den Widerstandschwellwert für den elektrischen Widerstand der Pumpzelle 36 bzw. Nernstzelle 40 dar, unterhalb dessen von einer gültigen Temperaturinformation für Pumpzelle 36 und/oder Nernstzelle 40 auszugehen ist. Beispielhaft wird ein Wert von 5000 Ohm gewählt.

Die beispielhaften Signalverläufe in Figur 3 stellen das Aufheizverhalten des Sensors 10 mit einem Zusatzwiderstand im Heizerschaltkreis von 1,5 Ohm dar. Der Bereich 70 kennzeichnet die vorbestimmte Heizdauer bzw. die erlaubte Aufheizdauer ohne Temperaturinformation über den Sensor 10, bevor der Sensor 10 in einen sicheren Heizerbetrieb zur Vermeidung einer Überhitzung überführt werden muss. Um einen OL-IPE-Fehler und damit ein Überhitzen des Sensors auszuschließen, muss innerhalb dieses Zeitraumes eine Unterschreitung des Widerstandschwellwerts der Nernstzelle 40 oder Pumpzelle 36 erfolgen. Wie in Figur 3 gezeigt, erfolgt die Unterschreitung des Widerstandschwellwerts der Nernstzelle 40 im gezeigten Beispiel nach 9,63s, da die Kurve 64 zu diesem Zeitpunkt den Widerstandschwellwerts 68 unterschreitet, während über die Pumpzelle 36 bei gleichem Widerstandschwellwert bereits 1,83s früher eine gültige Temperaturinformation des Sensors 10 vorliegt und damit ein Überhitzen des Sensors ausgeschlossen werden kann, da die Kurve 66 zum Zeitpunkt 7,80s den Widerstandschwellwert 68 unterschreitet. Dieser zeitliche Versatz (ca. 18% der vorbestimmten Aufheizdauer), sowie die Entkopplung des Überhitzungsschutzes von der Diagnosefreigabe von Leitungsunterbrechungen ermöglicht die gezielte Wahl eines (höheren) Zusatzwiderstandes, um einen WPA-Heizer von einem BPU-Heizer robust, unter Einbezug aller möglichen Betriebs- und Fahrzeugstreuungen, unterscheiden zu können.

Das erfindungsgemäße Verfahren ist in allen beheizten Abgassonden einsetzbar, welche über mindestens zwei Messzellen verfügen, wie z.B. Zweizeller-Lambdasonden oder NOx-Sensoren. Das erfindungsgemäße Verfahren ist nachweisbar durch einen Vergleich von Messungen des Verlaufs der effektiven Heizerspannung, Pump- und Nernstzellenwiderstands während der Aufheizphase mit verschiedenen Zusatzwiderständen im Heizerschaltkreis. Das erfindungsgemäße Verfahren ist außerdem nachweisbar durch einen Vergleich von Messungen des Verlaufs der effektiven Heizerspannung, Pump- und Nernstzellenwiderstands mit offener Leitung in jeweils einer Signalleitung.

## Patentansprüche

1. Verfahren zum Betreiben eines Sensors (10) zur Erfassung mindestens einer Eigenschaft eines Messgases in einem Messgasraum, insbesondere zur Erfassung eines Anteils einer Gaskomponente in dem Messgas, wobei der Sensor (10) ein Sensorelement (12) zur Erfassung der Eigenschaft des Messgases aufweist, wobei das Sensorelement (12) mindestens eine Nernstzelle (40), mindestens eine Pumpzelle (36) und mindestens ein Heizelement (42) aufweist, wobei das Verfahren die folgenden Schritte umfasst:
a) Beheizen des Sensorelements (12) mittels des Heizelements (42) für eine vorbestimmte Heizdauer,
c) Erfassen eines elektrischen Widerstands der Pumpzelle (36) während der vorbestimmten Heizdauer und Erzeugen eines den Widerstand der Pumpzelle (36) anzeigenden Signals,
d) Auswerten eines zeitlichen Verlaufs der den Widerstand der Pumpzelle-(36) anzeigenden Signale, wobei überprüft wird, ob das den Widerstand der Pumpzelle (36) anzeigende Signal einen Widerstandschwellwert innerhalb der vorbestimmten Heizdauer unterschreitet,
**dadurch gekennzeichnet, dass** das Verfahren zusätzlich folgende Schritte umfasst:
b) Erfassen eines elektrischen Widerstands der Nernstzelle (40) während der vorbestimmten Heizdauer und Erzeugen eines den Widerstand der Nernstzelle (40) anzeigenden Signals,
d') Auswerten eines zeitlichen Verlaufs der den Widerstand Nernstzelle (40) anzeigenden Signale, wobei überprüft wird, ob das den Widerstand der Nernstzelle (40) anzeigende Signal einen Widerstandschwellwert innerhalb der vorbestimmten Heizdauer unterschreitet, wobei
e) falls die Auswertung ergibt, dass das den Widerstand der Nernstzelle (40) anzeigende Signal den Widerstandschwellwert nicht innerhalb der vorbestimmten Heizdauer unterschreitet, das den Widerstand der Pumpzelle (36) anzeigende Signal den Widerstandschwellwert jedoch bereits unterschritten hat, eine Temperatur des Sensorelements basierend auf dem den Widerstand der Pumpzelle (36) anzeigenden Signal geregelt wird,
f) falls bis zu einer Freigabe der Diagnose von Leitungsunterbrechungen das den Widerstand der Nernstzelle (40) anzeigende Signal den Widerstandschwellwert noch unterschreiten sollte, ein regulärer Heizbetrieb mittels Temperaturregelung basierend auf dem Widerstand der Nernstzelle (40) durchgeführt wird.

2. Verfahren nach dem vorhergehenden Anspruch, wobei der Widerstandschwellwert einen Widerstandswert definiert, unterhalb dessen von einer gültigen Temperaturinformation für Pumpzelle (36) und/oder Nernstzelle (40) auszugehen ist.

3. Verfahren nach einem der vorhergehenden Ansprüche, weiterhin umfassend Anordnen unterschiedlich großer Zusatzwiderstände in einem Schaltkreis des Heizelements (42), die Schritte a) bis f) jeweils mit den unterschiedlich großen Zusatzwiderständen durchgeführt werden.

4. Verfahren nach einem der vorhergehenden Ansprüche, wobei der Widerstandschwellwert 4000 Ohm bis 150 kOhm und bevorzugt 7000 Ohm bis 8000 Ohm ist.

5. Verfahren nach einem der vorhergehenden Ansprüche, weiterhin umfassend Feststellen einer Unterbrechung einer Leitung zu der Nernstzelle (40) und/oder Pumpzelle (36) nach der Freigabe der Diagnose von Leitungsunterbrechungen und Sicherstellung des Überhitzungsschutzes des Sensorelements (12), falls das den Widerstand der Nernstzelle (40) und/oder Pumpzelle (36) anzeigende Signal den Widerstandschwellwert nicht innerhalb der vorbestimmten Heizdauer unterschreitet.

6. Verfahren nach dem vorhergehenden Anspruch, wobei bei Feststellen einer Unterbrechung der Leitung zu der Nernstzelle (40) eine Temperatur des Sensorelements (12) basierend auf dem den Widerstand der Pumpzelle (36) anzeigenden Signal geregelt wird.

7. Verfahren nach einem der vorhergehenden Ansprüche, weiterhin umfassend Feststellen einer intakten Leitung zu der Nernstzelle (40) und/oder Pumpzelle (36) nach der Freigabe der Diagnose von Leitungsunterbrechungen, falls das den Widerstand der Nernstzelle (40) und/oder Pumpzelle (36) anzeigende Signal den Widerstandschwellwert innerhalb der vorbestimmten Heizdauer unterschreitet.

8. System, umfassend mindestens Sensor (10) zur Erfassung mindestens einer Eigenschaft eines Messgases in einem Messgasraum, insbesondere zur Erfassung eines Anteils einer Gaskomponente in dem Messgas, wobei der Sensor ein Sensorelement (12) zur Erfassung der Eigenschaft des Messgases aufweist, wobei das Sensorelement (12) mindestens eine Nernstzelle (40), mindestens eine Pumpzelle (36) und mindestens ein Heizelement (42) aufweist, und mindestens eine Steuerung (48), wobei die Steuerung (48) mindestens einen Prozessor umfasst, wobei die Steuerung (48) eingerichtet ist, die Verfahrensschritte nach dem Verfahren nach einem der vorhergehenden Ansprüche durchzuführen.

9. Computerprogramm, umfassend Befehle, die bewirken, dass das System des Anspruchs 8 die Verfahrensschritte nach einem der Ansprüche 1-7 ausführt.

10. Datenträger, auf dem das Computerprogramm nach Anspruch 9 gespeichert ist.

11. Elektronisches Steuergerät (48), welches einen Datenträger nach dem vorhergehenden Anspruch umfasst.

## Claims

1. Method for operating a sensor (10) for detecting at least one property of a measurement gas in a measurement gas chamber, in particular for detecting a proportion of a gas component in the measurement gas, wherein the sensor (10) comprises a sensor element (12) for detecting the property of the measurement gas, wherein the sensor element (12) comprises at least one Nernst cell (40), at least one pump cell (36) and at least one heating element (42), wherein the method includes the following steps:
a) heating the sensor element (12) by means of the heating element (42) for a predetermined heating period,
c) detecting an electrical resistance of the pump cell (36) during the predetermined heating period and generating a signal indicating the resistance of the pump cell (36),
d) evaluating a time curve of the signals indicating the resistance of the pump cell (36), wherein a check is carried out in order to determine whether the signal indicating the resistance of the pump cell (36) falls below a resistance threshold value within the predetermined heating period,
**characterized in that** the method additionally includes the following steps:
b) detecting an electrical resistance of the Nernst cell (40) during the predetermined heating period and generating a signal indicating the resistance of the Nernst cell (40),
d') evaluating a time curve of the signals indicating the resistance of the Nernst cell (40), wherein a check is carried out in order to determine whether the signal indicating the resistance of the Nernst cell (40) falls below a resistance threshold value within the predetermined heating period, wherein
e) if the evaluation reveals that the signal indicating the resistance of the Nernst cell (40) does not fall below the resistance threshold value within the predetermined heating period, but the signal indicating the resistance of the pump cell (36) has already fallen below the resistance threshold value, a temperature of the sensor element is controlled based on the signal indicating the resistance of the pump cell (36),
f) if the signal indicating the resistance of the Nernst cell (40) still falls below the resistance threshold value until the diagnosis of line interruptions is enabled, regular heating operation is carried out by means of temperature control based on the resistance of the Nernst cell (40).

2. Method according to the preceding claim, wherein the resistance threshold value defines a resistance value below which valid temperature information for the pump cell (36) and/or Nernst cell (40) can be assumed.

3. Method according to one of the preceding claims, further comprising arranging additional resistors of different sizes in a circuit of the heating element (42), steps a) to f) each being carried out with the additional resistors of different sizes.

4. Method according to one of the preceding claims, wherein the resistance threshold value is 4000 ohms to 150 kiloohms and preferably 7000 ohms to 8000 ohms.

5. Method according to one of the preceding claims, further comprising determining an interruption in a line to the Nernst cell (40) and/or pump cell (36) after the diagnosis of line interruptions has been enabled and ensuring the overheating protection of the sensor element (12) if the signal indicating the resistance of the Nernst cell (40) and/or pump cell (36) does not fall below the resistance threshold value within the predetermined heating period.

6. Method according to the preceding claim, wherein, if an interruption in the line to the Nernst cell (40) is determined, a temperature of the sensor element (12) is controlled based on the signal indicating the resistance of the pump cell (36).

7. Method according to one of the preceding claims, further comprising determining an intact line to the Nernst cell (40) and/or pump cell (36) after the diagnosis of line interruptions has been enabled if the signal indicating the resistance of the Nernst cell (40) and/or pump cell (36) falls below the resistance threshold value within the predetermined heating period.

8. System comprising at least one sensor (10) for detecting at least one property of a measurement gas in a measurement gas chamber, in particular for detecting a proportion of a gas component in the measurement gas, wherein the sensor comprises a sensor element (12) for detecting the property of the measurement gas, wherein the sensor element (12) comprises at least one Nernst cell (40), at least one pump cell (36) and at least one heating element (42), and at least one controller (48), wherein the controller (48) comprises at least one processor, wherein the controller (48) is configured to carry out the method steps in accordance with the method according to one of the preceding claims.

9. Computer program comprising instructions that cause the system in Claim 8 to carry out the method steps in accordance with the method according to one of Claims 1-7.

10. Data carrier on which the computer program according to Claim 9 is stored.

11. Electronic control unit (48) which comprises a data carrier according to the preceding claim.

## Revendications

1. Procédé pour faire fonctionner un capteur (10) pour détecter au moins une propriété d'un gaz de mesure dans une chambre de gaz de mesure, en particulier pour détecter une proportion d'un composant gazeux dans le gaz de mesure, le capteur (10) possédant un élément capteur (12) pour détecter la propriété du gaz de mesure, l'élément capteur (12) possédant au moins une cellule de Nernst (40), au moins une cellule de pompage (36) et au moins un élément chauffant (42), le procédé comprenant les étapes suivantes :
a) chauffage de l'élément capteur (12) au moyen de l'élément chauffant (42) pendant une durée de chauffage prédéterminée,
c) détection d'une résistance électrique de la cellule de pompage (36) pendant la durée de chauffage prédéterminée et génération d'un signal indiquant la résistance de la cellule de pompage (36),
d) évaluation d'une évolution dans le temps des signaux indiquant la résistance de la cellule de pompage (36), un contrôle étant effectué afin de vérifier si le signal indiquant la résistance de la cellule de pompage (36) devient inférieur à une valeur de seuil de résistance pendant la durée de chauffage prédéterminée,
**caractérisé en ce que** le procédé comprend en plus les étapes suivantes :
b) détection d'une résistance électrique de la cellule de Nernst (40) pendant la durée de chauffage prédéterminée et génération d'un signal indiquant la résistance de la cellule de Nernst (40),
d') évaluation d'une évolution dans le temps des signaux indiquant la résistance de la cellule de Nernst (40), un contrôle étant effectué afin de vérifier si le signal indiquant la résistance de la cellule de Nernst (40) devient inférieur à une valeur de seuil de résistance pendant la durée de chauffage prédéterminée,
e) dans le cas où l'évaluation révèle que le signal indiquant la résistance de la cellule de Nernst (40) ne devient pas inférieur à la valeur de seuil de résistance pendant la durée de chauffage prédéterminée, mais que le signal indiquant la résistance de la cellule de pompage (36) est déjà devenu inférieur à la valeur de seuil de résistance, une température de l'élément capteur étant alors régulée sur la base du signal indiquant la résistance de la cellule de pompage (36),
f) dans le cas où, jusqu'à une validation du diagnostic d'interruptions de ligne, le signal indiquant la résistance de la cellule de Nernst (40) devrait encore devenir inférieur à la valeur de seuil de résistance , un mode de chauffage normal étant effectué au moyen d'une régulation de température sur la base de la résistance de la cellule de Nernst (40).

2. Procédé selon la revendication précédente, la valeur de seuil de résistance définissant une valeur de résistance en dessous de laquelle une information de température valide pour la cellule de pompage (36) et/ou la cellule de Nernst (40) peut être supposée.

3. Procédé selon l'une des revendications précédentes, comprenant en outre l'agencement de résistances supplémentaires de valeurs différentes dans un circuit de l'élément chauffant (42), les étapes a) à f) étant respectivement exécutées avec les résistances supplémentaires de valeurs différentes.

4. Procédé selon l'une des revendications précédentes, la valeur de seuil de résistance étant de 4 000 ohms à 150 kohms et de préférence de 7 000 ohms à 8 000 ohms.

5. Procédé selon l'une des revendications précédentes, comprenant en outre la constatation d'une interruption d'une ligne vers la cellule de Nernst (40) et/ou la cellule de pompage (36) après avoir validé le diagnostic des interruptions de ligne et garanti la protection contre la surchauffe de l'élément capteur (12), dans le cas où le signal indiquant la résistance de la cellule de Nernst (40) et/ou de la cellule de pompage (36) ne devient pas inférieur à la valeur de seuil de résistance pendant la durée de chauffage prédéterminée.

6. Procédé selon la revendication précédente, lors de la constatation d'une interruption de la ligne vers la cellule de Nernst (40), une température de l'élément capteur (12) étant régulée sur la base du signal indiquant la résistance de la cellule de pompage (36).

7. Procédé selon l'une des revendications précédentes, comprenant en outre la constatation d'une ligne intacte vers la cellule de Nernst (40) et/ou la cellule de pompage (36) après avoir validé le diagnostic des interruptions de ligne, dans le cas où le signal indiquant la résistance de la cellule de Nernst (40) et/ou de la cellule de pompage (36) devient inférieur à la valeur de seuil de résistance pendant la durée de chauffage prédéterminée.

8. Système comprenant au moins un capteur (10) pour détecter au moins une propriété d'un gaz de mesure dans une chambre de gaz de mesure, en particulier pour détecter une proportion d'un composant gazeux dans le gaz de mesure, le capteur possédant un élément capteur (12) pour détecter la propriété du gaz de mesure, l'élément capteur (12) possédant au moins une cellule de Nernst (40), au moins une cellule de pompage (36) et au moins un élément chauffant (42), et au moins une commande (48), la commande (48) comprenant au moins un processeur, la commande (48) étant conçue pour exécuter les étapes du procédé selon l'une des revendications précédentes.

9. Programme informatique, comprenant des instructions qui ont pour effet que le système selon la revendication 8 exécute les étapes du procédé selon l'une des revendications 1 à 7.

10. Support de données, sur lequel est enregistré le programme informatique selon la revendication 9.

11. Contrôleur électronique (48), lequel comprend un support de données selon la revendication précédente.
